# EUROPEAN PATENT APPLICATION

(11) **EP 4 645 802 A1**
(43) Date of publication of application: **05.11.2025**
(21) Application number: 23911006.7
(22) Date of filing: 29.12.2023
(51) Int. Cl.: H04L 41/0895

(54) **NFV ACCESS METHOD AND SYSTEM, AND DEVICE AND STORAGE MEDIUM**

(30) Priority: 30.12.2022 CN 202211728770
(71) Applicant: Cloud Intelligence Assets Holding (Singapore) Private Limited, Singapore 189554 (SG)
(72) Inventor: ZONG, Zhigang, Hangzhou, Zhejiang 310030 (CN); XUE, Bengbeng, Hangzhou, Zhejiang 310030 (CN); WU, Xiaomin, Hangzhou, Zhejiang 310030 (CN); PENG, Xiaoxin, Hangzhou, Zhejiang 310030 (CN); ZHU, Shunmin, Hangzhou, Zhejiang 310030 (CN)
(74) Representative: Barker Brettell LLP
(86) International application number: PCT/CN2023/143656
(87) International publication number: WO 2024/141093

(57) **Abstract**

Embodiments of the present application provide an NFV access method, device, system and storage medium. In the embodiment of the present application, a gateway device is disposed between a client VPC and a service VPC, which is configured to: intercept a data packet that a client instance in the client VPC requests to access an NFV instance in the service VPC; and perform two-layer tunnel encapsulations on the data packet; encapsulate tenant information of the client instance as inner tunnel information in the inner layer, and the identity of the gateway device is presented to the outside uniformly, which makes a virtual switch where the NFV instance is located no longer process the inner tunnel information, and makes the tenant information of the client instance invisible, and the user's access to the NFV instance is no longer limited by a specification of access resources such as a virtual network interface supported by the virtual switch, which allows more tenants to access the NFV instance, thus implementing the NFV instance with a larger specification.

## Description

The present application claims the priority of China patent application No. 202211728770.9 filed to China National Intellectual Property Administration on December 30, 2022 and titled "NFV access method, device, system and storage medium", the entire contents of which are incorporated into the present application by reference.

### TECHNICAL FIELD

The present application relates to a technical field of cloud computing, in particular to an NFV access method, device, system and storage medium.

### BACKGROUND

Network Function Virtualization (Network Function Virtualization, NFV) is a kind of network service virtualization technology, which can decouple software functions of a network device from a hardware platform and avoid supply binding. At the same time, NFV technology has developed rapidly because of the higher iterative efficiency of software functions.

After the rise of cloud computing, the NFV technology has become the basic technology of cloud computing network construction because of the demand for rapid iteration. Up to now, the NFV technology in a cloud network has undergoing two generations of evolution. The first generation is constructed in a manner of physical server, that is, an NFV network element is deployed on a physical server. However, because the supply of physical server is still constrained by a supply cycle of a hardware server, the NFV technology has gradually evolved to the second generation based on cloud-native resources, that is, an NFV network element is no longer deployed on a physical server, but deployed on various cloud computing instances, which makes use of the vastness of cloud computing resources, is constructed on demand and is available at any time to achieve the goal of flexible optimization.

However, at present, when using a cloud computing instance as a carrier, an NFV network element on a cloud is limited in an aspect of user access, and can only allow a limited number of users to access, so it is impossible to implement an NFV network element with larger specifications.

### SUMMARY

Various aspects of the present application provide an NFV access method, device, system and storage medium, which are configured to solve a user access problem of an NFV network element on a cloud, allowing more users to access, and implementing an NFV network element with a larger specification.

An embodiment of the present application provides an NFV access system, which includes a first gateway device interconnected between a client virtual private cloud VPC and a service VPC; where the client VPC includes a client instance and a first virtual switch VS providing a data forwarding service for the client instance, and the service VPC includes an NFV instance carrying an NFV network element and a second VS providing a data forwarding service for the NFV instance; where the first gateway device is configured to intercept a data packet of the client instance accessing the NFV instance through the first VS; encapsulate the intercepted data packet with an inner tunnel encapsulation using tenant information of the client instance as inner tunnel information; and further encapsulate the inner-tunnel-encapsulated data packet with an outer tunnel encapsulation using identity information of the first gateway device; and send the outer-tunnel-encapsulated data packet to the second VS, so as to be forwarded by the second VS to the NFV instance to implement an access to the NFV instance.

An embodiment of the present application also provides an NFV access method, which is applied to the first gateway device, and the method includes the following steps: intercepting a data packet of a client instance accessing an NFV instance through a first virtual switch VS; encapsulating the intercepted data packet with an inner tunnel encapsulation using tenant information of the client instance as inner tunnel information; encapsulating the inner-tunnel-encapsulated data packet with an outer tunnel encapsulation using identity information of the first gateway device; and sending the outer-tunnel-encapsulated data packet to a second VS corresponding to the NFV instance, so as to be forwarded by the second VS to the NFV instance to implement an access to the NFV instance.

An embodiment of the present application also provides an NFV access method, which is applied to a second gateway device, and the method includes the following steps: receiving a first tunnel packet sent by a first virtual switch VS, where the first tunnel packet is obtained by performing a tunnel encapsulation on a data packet of a client instance accessing an NFV instance by the first VS, and tunnel information of the first tunnel packet includes tenant information of the client instance; re-encapsulating the first tunnel packet as a second tunnel packet, and sending the second tunnel packet and the tenant information of the client instance to a first gateway device, so that the first gateway device encapsulates the data packet with an inner tunnel encapsulation using the tenant information of the client instance as inner tunnel information, and encapsulates the inner-tunnel-encapsulated data packet with an outer tunnel encapsulation using identity information of the first gateway device and forwards the outer-tunnel-encapsulated data packet to the NFV instance through a second VS, thus implementing an access to the NFV instance.

An embodiment of the present application provides a gateway device, which includes a memory and a processor, where the memory is configured to store a computer program; and the processor, coupled with the memory, is configured to execute the computer program, causing the processor to implement steps in the NFV access method executed by a first gateway device or steps in an NFV access method executed by a second gateway device.

An embodiment of the present application provides a computer-readable storage medium storing a computer program which, when executed by a processor, causes the processor to implement steps in the NFV access method executed by a first gateway device or steps in an NFV access method executed by a second gateway device.

In an embodiment of the present application, a gateway device is disposed between a client VPC and a service VPC, which is configured to: intercept a data packet that a client instance in the client VPC requests to access an NFV instance in the service VPC; and perform two-layer tunnel encapsulations on the data packet; encapsulate tenant information of the client instance as inner tunnel information in the inner layer, and the identity of the gateway device is presented to the outside uniformly, which makes a virtual switch where the NFV instance is located no longer process the inner tunnel information, and makes the tenant information of the client instance invisible, and the user's access to the NFV instance is no longer limited by a specification of access resources such as a virtual network interface supported by the virtual switch, which allows more tenants to access the NFV instance, thus implementing the NFV instance with a larger specification.

### BRIEF DESCRIPTION OF DRAWINGS

The accompanying drawings described herein are used to provide a further understanding of the present application and constitute a part of the present application. The illustrative embodiments of the present application and their descriptions are used to explain the present application and do not constitute undue limitations on the present application. In the accompanying drawings:
FIG. 1 is a schematic structural diagram of an NFV system based on cloud-native resources;
FIG. 2 is a schematic structural diagram of an NFV access system provided by an embodiment of the present application;
FIG. 3 is a schematic structural diagram of another NFV access system provided by an embodiment of the present application;
FIG. 4 is a schematic diagram of an application scenario of an NFV access system provided by an exemplary embodiment of the present application;
FIG. 5 is a flowchart of an NFV access method provided by an embodiment of the present application;
FIG. 6 is a flowchart of another NFV access method provided by the embodiment of the present application;
FIG. 7 is a schematic structural diagram of an NFV access apparatus provided by an embodiment of the present application;
FIG. 8 is a schematic structural diagram of another NFV access apparatus provided by an embodiment of the present application; and
FIG. 9 is a schematic structural diagram of a gateway device provided by an embodiment of the present application.

### DESCRIPTION OF EMBODIMENTS

In order to make the purpose, technical solution and advantages of the present application clearer, the technical solution of the present application will be described clearly and completely with concrete embodiments of the present application and corresponding drawings. It is evident that the described embodiments are only some of the embodiments of the present application, not all of the embodiments. Based on the embodiments in the present application, all other embodiments obtained by those of ordinary skill in the art without creative work falls into the protection scope of the present application.

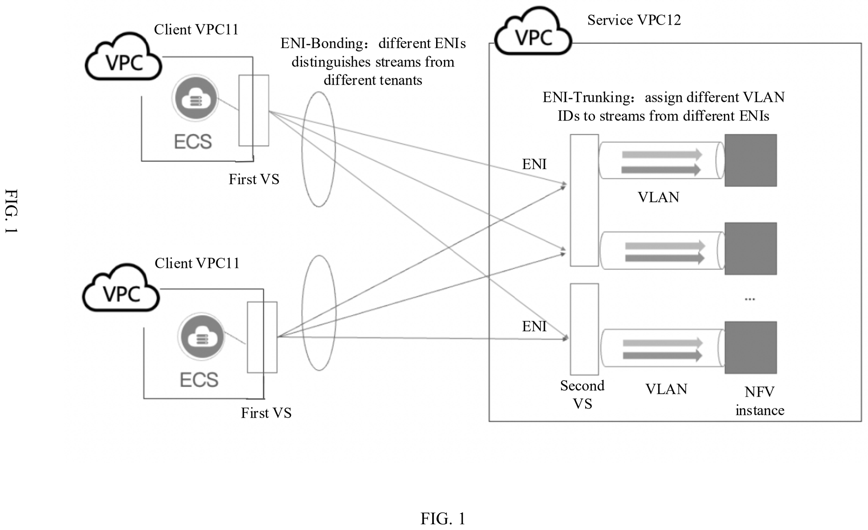

FIG. 1 is a schematic structural diagram of an NFV system based on cloud-native resources. As shown in FIG. 1, the system includes: a plurality of VPC; the VPC is a logically isolated network environment built on a physical network by using virtualization technology. The physical network includes various physical resources, such as a physical machine, a switch or a gateway, etc. One or more VPCs can be deployed on the physical resource in one region (region), and one VPC is commonly deployed in one region. In the embodiment, a service instance is deployed in each VPC, and these service instances can access each other. In an embodiment of the present application, VPCs are divided from the perspective of service instances, and multiple VPCs are divided into client VPC11 and service VPC12. There may be one or more client VPCs 11 and one or more service VPCs 12. Each client VPC11 belongs to a tenant, and different clients VPC11 can belong to the same tenant or different tenants, which is not limited.

In an embodiment of the present application, the service VPC12 refers to a VPC that can provide an NFV network element based on cloud-native resources, and the VPC includes at least one NFV network element, such as server load balancing (Server Load Balancing, SLB), network address translation (Network Address Translation, NAT), transit router (Transit Router, TR), etc. These NFV network elements are carried on a cloud computing instance. For the convenience of description and distinction, the cloud computing instance carrying an NFV network element in the service VPC12 is called an NFV instance. In the embodiment, an NFV instance represents an NFV network element carried on the NFV instance. An NFV instance can include various cloud computing instances, such as a virtual machine (Virtual Machine, VM), a container, a bare metal server, an elastic compute service (Elastic Compute Service, ECS) or a cloud computing service based on a field programmable gate array (Field Programmable Gate Array, FPGA). Cloud computing instances with different specifications can be used to provide different types of NFV network elements. For example, layer 7 SLB has higher requirements for computing power and can take a compute-type ECS as a carrier, while layer 4 SLB has higher requirements for forwarding throughput and can take a network-type ECS as a carrier.

In various embodiments of the present application, the client VPC11 refers to a VPC that provides a client instance, and the client instance in the VPC refers to a cloud computing instance that needs to use a service provided by an NFV network element, such as but not limited to VM, ECS, a service module or an application instance, etc. Each client VPC11 includes at least one client instance, which is carried on one or more physical machines, and each physical machine is also deployed with a virtual switch (Virtual Switch, VS), which is configured to provide a data forwarding service for the client instance on that physical machine. Correspondingly, the service VPC12 includes at least one NFV instance, and the number of the same kind of NFV instance is one or more. These NFV instances are carried on one or more physical machines, and each physical machine is also deployed with a VS, which is configured to provide a data forwarding service for the NFV instance on that physical machine. The VS can be an open virtual switch (Open Virtual Switch, OVS). For the convenience of distinction and description, a VS providing a data forwarding service for a client instance in the client VPC11 is called a first VS, and a VS providing a data forwarding service for an NFV instance in the service VPC12 is called a second VS.

In the embodiment, a basic function of an NFV instance includes high availability of equal cost multi-path (Equal Cost Multi-path, ECMP) and multi-tenant access. In the system shown in FIG. 1, the ECMP capability of an NFV instance opens up the network connectivity between a tenant on a cloud and the NFV instance through ENI-bonding (bonding) technology, that is, an elastic network interface (Elastic Network Interface, ENI) is deployed in each client VPC11, and the ENI has a private network IP address, so the ENI can be mounted on the NFV instance. The NFV instance is represented by the private network IP address possessed by the ENI and the port number of the NFV instance, so that the client instance in the client VPC11 can access the NFV instance through the ENI. The ENIs mounted on the same NVF instance in different client VPC11 may have the same private network IP address or different private network IP addresses, which is not limited. In the embodiment, different ENIs represent different tenants, and there is a one-to-one correspondence between ENI and tenant.

In the system shown in FIG. 1, the multi-tenant access, by ENI-Trunking technology, assigns different virtual local area network (Virtual Local Area Network, VLAN) tags (TAG) to streams from different ENIs (streams from different ENIs represent streams from different tenants) in the process of forwarding to an NFV instance, that is, different VLAN TAGs are configured to identify different tenants, thus implementing the isolation between tenants.

In the system shown in FIG. 1, the NFV access or access process based on the above-mentioned ENI-bonding and ENI-Trunking technologies is as follows:

When a client instance in a client VPC requests to access an NFV instance in a service VPC, a data packet first arrives at a VS where the client instance is located (i.e., a first VS), and the first VS forwards the data packet to a VS where the NFV instance is located (i.e., a second VS) based on pre-configured routing information. When the data packet arrives at the second VS where the NFV instance is located, the second VS judges whether there are multiple NFV instances to be processed together, and if so, a target path is selected from multiple paths through a hash (hash) algorithm and the data packet is forwarded to the corresponding NFV instance for processing through the target path. When a path or an NFV instance fails, this path will be deleted automatically, so as to achieve the high availability of ECMP. This process is called an ENI-Bonding process.

A common forwarding flow after selecting the target path is: firstly, judge whether the data packet is a first data packet in a data stream; if so, the CPU of the second VS performs software forwarding processing and establishes session (session) information of the data stream. The session information records the five-tuple and exit port information of the data stream, and the exit port information corresponds to a destination NFV instance; and subsequent data packets in the data stream can be directly forwarded to the destination NFV instance by directly looking up the established session information.

In the above process, client instances of multiple different tenants may request to access the same NFV instance, and data packets of different tenants are from different ENIs. As shown in FIG. 1, the second VS will receive data packets from different ENIs; further, in order for an NFV instance to distinguish data packets of different tenants, the second VS will map to a VLAN ID according to a source VPC ID in the data packet. As shown in FIG. 1, data packets of different tenants are distinguished by different VLAN IDs, and this process is called an ENI-Trunking process. The number of ENI supported by the second VS determines the number of VLAN, which also determines the number of different tenants that can access the NFV instance.

As can be seen from the above data packet processing process, from the client instance to the NFV instance, the data packet needs to be processed by the second VS. The network IO capability of the second VS directly affects the number of tenants that can access the NFV network element, and the network IO capability of the second VS mainly refers to the ENI specification and the session specification that the second VS can support. Because a cloud computing instance is developed for an IT-type application, and the IT-type application is a compute-type application, that is, the requirements for central processing unit (Central Processing Unit, CPU) and memory resources are relatively high, but the requirement for network communication is low, and the cloud computing instance mainly match the compute-type application, so the ENI specification and the session specification supported by the VS providing a data forwarding service for the cloud computing instance are relatively low. At present, the ENI specification supported by the mainstream VS is about dozens, and the session specification are about 1 million. The ENI specification supported by the VS with the largest network capacity is only about 1,000 and the session specification is about 10 million. The number of users that an actual NFV instance can handle can reach tens of thousands, and the number of sessions (session) can reach hundreds of millions. The difference between the network IO capability of a VS and the capability of an NFV instance is 10 times or even 100 times, which will seriously restrict the NFV instance, waste the resources of that NFV instance and limit the user access specification of the NFV instance.

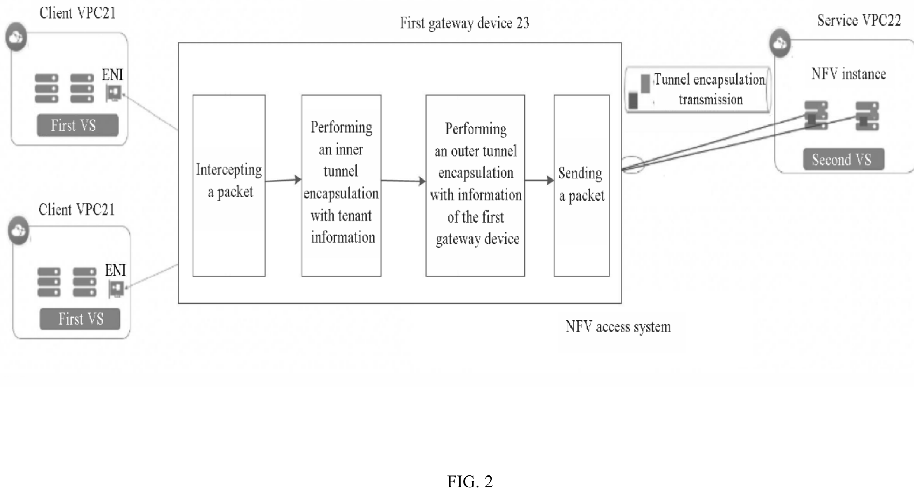

To solve the above problems, an embodiment of the present application provides a new NFV access system, as shown in FIG. 2, which includes a client VPC21, a service VPC22, and a first gateway device 23 interconnected between the client VPC21 and the service VPC22. The related introductions of the client VPC21 and the service VPC22 are the same as those of the client VPC11 and the service VPC12 in the previous embodiments, and will not be repeated here.

In the embodiment, the client VPC21 at least includes a client instance, a first VS able to provide a data forwarding service for the client instance, and an ENI mounted on an NFV instance in the service VPC22. The client instance can initiate an access to the NFV instance through the ENI mounted to the NFV instance, and a data packet for accessing the NFV instance is forwarded to the NFV instance through the first VS. The process of the client instance accessing the NFV instance in the embodiment is different from that in the system shown in FIG. 1. In the embodiment, the data packet configured for the client instance accessing the NFV instance through the first VS does not directly arrive at the second VS through the first VS, but is intercepted by the first gateway device 23. After intercepting the data packet, the first gateway device 23 encapsulates the intercepted data packet with an inner tunnel encapsulation using tenant information of the client instance as inner tunnel information, and encapsulates the inner-tunnel-encapsulated data packet with an outer tunnel encapsulation using identity information of the first gateway device, and sends the outer-tunnel-encapsulated data packet to the second VS, enabling the second VS to forward data packet to the NFV instance to implement the access to the NFV instance. The tenant information of the client instance can be any information that can uniquely identify the tenant to which the client instance belongs, such as but not limited to an ID of the client VPC to which the client instance belongs or an ID of the tenant.

In the embodiment, the first gateway device is set between the client VPC and the service VPC, which is configured to intercept the data packet that the client instance requests to access the NFV instance, and perform two-layer tunnel encapsulations on the data packet, encapsulate tenant information of the client instance as inner tunnel information in the inner layer, and the identity of the first gateway device is presented to the outside uniformly, which makes the second VS where the NFV instance is located no longer process the inner tunnel information, and makes the tenant information of the client instance invisible, and the user's access to the NFV instance is no longer limited by the ENI specification supported by the second VS, which allows more tenants to access the NFV instance, thus implementing the NFV instance with a larger specification.

In an embodiment of the present application, an implementation mode of a first gateway device is not limited, and according to different implementation modes of the first gateway device, the way it intercepts a data packet through which a client instance accesses an NFV instance through a first VS will also vary. The following is an example.

In an alternative embodiment A1, each client VPC is associated with a traditional gateway device. In order to facilitate the distinction, the traditional gateway device is referred to as a VPC gateway device (VGW). The VGW is configured to maintain and distribute routing information corresponding to each client instance in a client VPC. In a traditional solution, when a data packet of a client instance arrives at a first VS, the first VS judges whether routing information corresponding to the data packet exists locally. If not, the first VS sends the data packet to the VGW, and the VGW performs forwarding on the data packet according to pre-maintained routing information, and distributes the routing information corresponding to the data packet to the first VS, and subsequent packets are forwarded by the first VS according to the distributed routing information. In the embodiment, the function of the VGW associated with the client VPC can be improved to implement a new gateway device, that is, a first gateway device. In the embodiment, the VGW is improved for a forwarding function of accessing an NFV instance; all data packets accessing the NFV instance are uniformly forwarded by the VGW, and the VGW no longer distributes routing information required for accessing the NFV instance to the first VS.

Based on the above, when a client instance accesses an NFV instance, a data packet can be sent to the first VS through an ENI corresponding to the NFV instance, and the first VS performs a tunnel encapsulation on the data packet sent by the client instance to obtain a first tunnel packet. In the embodiment, tunnel information in various tunnel packets at least includes a source address, a destination address and a virtual network identification (VNI) information, where the source address indicates a source end of the tunnel and the destination address indicates a destination end of the tunnel, and the VNI information is a network identification, which can be configured to represent different information in different tunnel packets. In the tunnel information of the first tunnel packet, the source address is an IP address of the first VS, the destination address is an IP address of a first gateway device, and the VNI information indicates tenant information of the client instance.

Since the first VS does not locally have routing information corresponding to the client instance, the first VS sends the first tunnel packet to the first gateway device, that is, the VGW. The first gateway device, namely the VGW, receives the first tunnel packet sent by the first VS, and the action of receiving the first tunnel packet can be considered as intercepting the data packet of the client instance accessing the NFV instance through the first VS. After receiving the first tunnel packet, the first gateway device doesn't perform forwarding as the traditional VGW, but acquires tenant information of the client instance from the tunnel information of the first tunnel packet; encapsulates the data packet with an inner tunnel encapsulation using the tenant information of the client instance as inner tunnel information; and encapsulates the inner-tunnel-encapsulated data packet with an outer tunnel encapsulation using identity information of the first gateway device; and sends the outer-tunnel-encapsulated data packet to the second VS, so as to be forwarded by the second VS to the NFV instance to implement an access to the NFV instance. In the embodiment, the first gateway device is an improved VGW.

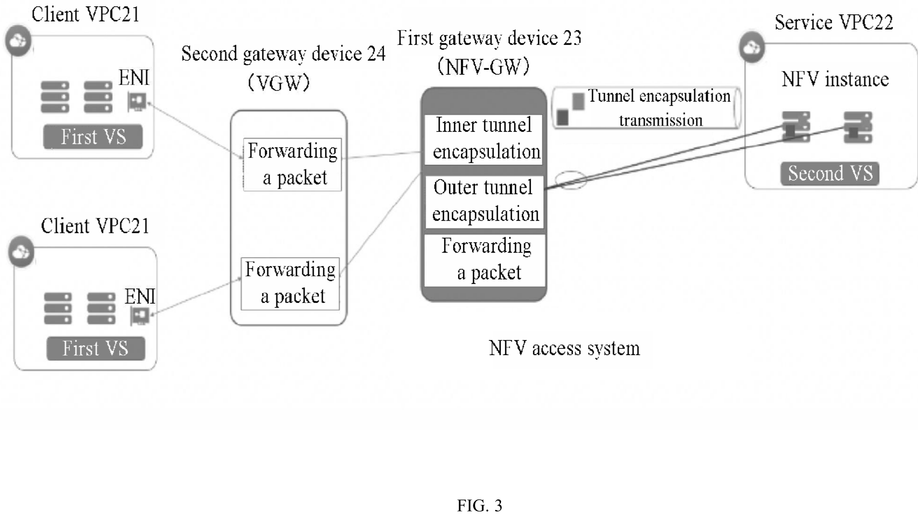

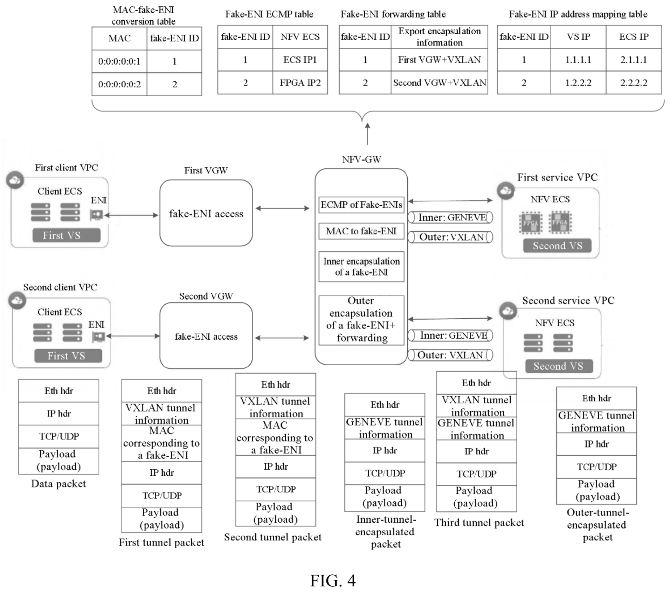

In another alternative embodiment A2, the first gateway device may be a newly added gateway device, which is mainly configured to intercept the data packet of the client instance accessing the NFV instance and perform two-layer tunnel encapsulations on it, and may be referred to as an NFV gateway device (i.e., the NFV-GW). As shown in FIG. 3, the NVF access system further includes a second gateway device 24, which is a traditional gateway device associated with the client VPC, and is referred to as a VPC gateway device (VGW) for the convenience of distinction. For the convenience of distinction, in FIG. 3, for example, the second gateway device is depicted as VGW and the first gateway device is depicted as NFV-GW for illustrative purposes. It should be noted that there may be a one-to-one relationship between the client VPC and the second gateway device 24 (that is, one client VPC is associated with one second gateway device 24, as shown in FIG. 4) or a many-to-one relationship (that is, multiple client VPCs are associated with the same second gateway device 24, as shown in FIG. 3). The second gateway device (i.e., the VGW) is interconnected with the first VS on the one hand, and is interconnected with the first gateway device (i.e., the NFV-GW) on the other hand, and the first gateway device (i.e., the NFV-GW) is interconnected with the second VS. In the embodiment, not only the first gateway device is added, but also the function of the second gateway device is improved. The second gateway device cooperates with the first VS to assist the first gateway device to perform an intercept on the data packet that is from the client instance to the NFV instance during the process of the client instance accessing the NFV instance.

Based on the above, when a client instance accesses an NFV instance, a data packet can be sent to a first VS through an ENI corresponding to the NFV instance, and the first VS performs a tunnel encapsulation on the data packet sent by the client instance to obtain a first tunnel packet. For the description of the first tunnel packet, please refer to the above, which is not repeated here. Since the first VS does not locally have the routing information corresponding to the client instance, the first VS sends the first tunnel packet to a second gateway device, namely a VGW.

The second gateway device, namely the VGW, receives the first tunnel packet sent by the first VS, acquires the tenant information of the client instance from the tunnel information of the first tunnel packet, re-encapsulates the first tunnel packet as a second tunnel packet, and sends the second tunnel packet and the tenant information of the client instance to the first gateway device, namely the NFV-GW. In the embodiment, the second gateway device will not distribute routing information required for accessing the NFV instance to the first VS, and all data packets accessing the NFV instance are forwarded by the second gateway device and the first gateway device. The tunnel information in the second tunnel packet at least includes a source address, a destination address and VNI information, where the source address is an IP address of the second network device (i.e., the VGW) and the destination address is an IP address of the first gateway device, and the VNI information is tenant information of the client instance. In the embodiment, the way that the second gateway device (i.e., the VGW) sends the tenant information of the client instance to the first gateway device (i.e., the NFV-GW) is not limited. For example, the tenant information of the client instance can be sent to the first gateway device (i.e., the NFV-GW) through the VNI information in the tunnel information of the second tunnel packet, or the tenant information of the client instance can be sent to the first gateway device (i.e., the NFV-GW) through a control plane message.

For the first gateway device (i.e., the NFV-GW), the second tunnel packet and the tenant information of the client instance which are sent by the second gateway device (i.e., the VGW) can be received. The action of receiving the second tunnel packet can be regarded as intercepting a data packet of the client instance accessing the NFV instance through the first VS. Based on this, after receiving the second tunnel packet, the first gateway device can parse the data packet from it, encapsulate the data packet with an inner tunnel encapsulation using tenant information of the client instance as inner tunnel information, and encapsulate the inner-tunnel-encapsulated data packet with an outer tunnel encapsulation using identity information of the first gateway device, and send the outer-tunnel-encapsulated data packet to the second VS, so as to be forwarded by the second VS to the NFV instance to implement an access to the NFV instance. In the embodiment, the first gateway device is an NFV-GW, which is different from an improved VGW.

No matter which implementation method is adopted by the first gateway device, a way for the first gateway device to encapsulate the data packet with an inner tunnel encapsulation using the tenant information of the client instance as inner tunnel information, includes: taking the address information of the first gateway device and the address information of the NFV instance respectively as the source address and the destination address of the inner tunnel information, taking the tenant information of the client instance as the VNI information of the inner tunnel information, and performing an inner tunnel encapsulation on the data packet. Accordingly, a way for the first gateway device to encapsulate the inner-tunnel-encapsulated data packet with an outer tunnel encapsulation using identity information of the first gateway device includes: taking the address information of the first gateway device and the address information of the second VS as the source address and the destination address of outer tunnel information, taking the identification information of the first gateway device as the VNI information of the outer tunnel information, and encapsulating the inner-tunnel-encapsulated data packet with an outer tunnel encapsulation .

Further alternatively, whether the inner tunnel encapsulation or the outer tunnel encapsulation mentioned above, but not limited to the following tunnel protocols can be adopted: generic network virtualization encapsulation (Generic Network Virtualization Encapsulation, GENEVE), or virtual extensible local area network (Virtual Extensible Local Area Network, VXLAN), or segment routing based on IPv6 (Segment Routing IPv6, SRv6). The tunnel protocols adopted by the inner tunnel encapsulation and the outer tunnel encapsulation can be the same or different, which is not limited.

In some alternative embodiments, in order to reduce the intrusion of the first gateway device (i.e., the NFV-GW) into the client instance, the ENI of the cloud computing instance can be simulated for the first gateway device, that is, the first gateway device is configured with a simulated ENI, which can also be referred to as a fake-ENI, and a MAC address corresponding to the fake-ENI is configured on the first VS, so as to implement the encapsulation of tenant information by the first gateway device through the fake-ENI; that is, the identification information of the first gateway device can be simulated ENI information of the first gateway device. Based on this, combined with the system shown in FIG. 3, the detailed access process of the NFV instance provided by an embodiment of the present application is as follows.

Specifically, in order to reduce the modification to the tenant side, the function of the client instance remains unchanged. When the client instance needs to access the NFV instance, a data packet is normally sent, and the data packet reaches the first VS. The first VS looks up a local routing table and finds that there is no routing information corresponding to the data packet, so the data packet is forwarded to the VGW corresponding to the client VPC. Specifically, the first VS performs a tunnel encapsulation on the data packet according to the MAC address corresponding to the locally configured fake-ENI to obtain the first tunnel packet with the source address being the IP address of the first VS and the destination address being the IP address of the VGW and sends the first tunnel packet to the VGW. The VNI field in the first tunnel packet carries the tenant information of the client instance, and the first tunnel packet also carries the MAC address corresponding to the fake-ENI. In the embodiment, the VGW will not send routing information to the first VS, so all data packets sent from the client instance to the NFV instance will be sent to the VGW.

The VGW is locally pre-configured with a specific forwarding table entry for accessing an NFV instance, and the next hop in this forwarding table entry points to the NFV-GW, so that all data packets accessing an NFV instance will be forwarded to the NFV-GW. Specifically, the VGW parses the data packet from the first tunnel packet, re-performs a tunnel encapsulation on the data packet to obtain the second tunnel packet with the source address being the IP address of the VGW and the destination address being the IP address of the NFV-GW, and sends the second tunnel packet to the NFV-GW. It is explained here that data packets accessing other cloud computing instances or other services VPC can be processed according to the traditional process, which is no restricted. The VGW can also send the tenant information of the client instance to the NFV-GW through the control plane packet.

The NFV-GW parses the data packet from the second tunnel packet after receiving it, and performs two-layer tunnel encapsulations on the data packet, namely, an inner tunnel encapsulation and an outer tunnel encapsulation. The inner tunnel encapsulation is configured to encapsulate the tenant information of the client instance, and the outer tunnel encapsulation is configured to encapsulate the tunnel information needed to forward the data packet. In the embodiment, the tunnel technology adopted for a tunnel encapsulation is not limited. For example, whether it is an inner tunnel encapsulation or an outer tunnel encapsulation, the adopted tunnel technology can be but not limited to: GENEVE, VXLAN or SRv6, any tunnel protocol that can identify multi-tenants is applicable to an embodiment of the present application. The source address of the inner tunnel information is the IP address of the NFV-GW, the destination address is the IP address of the NFV instance to be accessed, and the inner VNI information is the tenant information of the client instance; the source address of the outer tunnel information is the IP address of the NFV-GW, the destination address is the IP address of the second VS, and the outer VNI information is the fake-ENI of the NFV-GW.

In the embodiment, NFV-GW adopts the fake-ENI to implement the ENI-bonding with the second VS, that is, the second VS is able to assign the NFV-GW an interface bound with the fake-ENI to facilitate their communication. For convenience of description, this interface is referred to as an ENI-bonding interface. Based on this, the NFV-GW sends a packet undergoing the inner and outer two-layer tunnel encapsulations to the second VS through the ENI-bonding interface between the NFV-GW and the second VS, and the second VS processes the packet undergoing the two-layer tunnel encapsulations.

The second VS only processes the outer tunnel information, and judges whether the packet is a first packet of a data stream according to the outer tunnel information. If so, a CPU of the second VS performs software forwarding processing and establishes a forwarding session (session) of the data stream. The session records the five-tuple of the data stream (the five-tuple is the five-tuple in the outer tunnel information) and exit port information, and the exit port information corresponds to a destination NFV instance. Subsequent packets in the data stream are directly forwarded to the destination NFV instance by directly looking up the established session information.

In the embodiment, an NFV-GW is added and the NFV-GW cooperates with the VGW associated with the client VPC, and the tenant information of the client instance is encapsulated to the inner by adding a layer of tunnel encapsulation. From the perspective of the second VS, the fake-ENI corresponding to the NFV-GW is seen, and the inner tunnel information is no longer processed. Therefore, even if the ENI-bonding technology is adopted, the second VS only needs one ENI, one VLAN ID, and the session information will only record the five-tuple corresponding to the outer tunnel, and the five-tuple will not change during the whole access process, which will greatly reduce the requirements of different tenants on the ENI and session specifications supported by the second VS when accessing an NFV instance, and effectively solve the constraints of the second VS on the ENI specification and the session specification. From the perspective of NFV instance, because the second VS only sees the NFV-GW, it presents a single tenant and a single stream, which well solves the problem that an NFV instance is constrained by the network IO capability of the second VS, and is beneficial for more users accessing an NFV instance.

An NFV access process provided by an embodiment of the present application will be described in detail in combination with an application scenario and a system architecture shown in FIG. 4 and a packet encapsulation process shown in FIG. 4:

In FIG. 4, taking two client VPCs as an example, each client VPC includes a client ECS and a first VS, and each client VPC connects one VGW. The two client VPCs are respectively denoted as a first client VPC and a second client VPC, and the two VGWs are respectively denoted as a first VGW and a second VGW, and the two VGWs are respectively interconnected with an NFV-GW. The NFV-GW connects two service VPCs, each of which includes an NFV ECS and a second VS. The two service VPCs are denoted as a first service VPC and a second service VPC, respectively. The NFV ECS in the second service VPC is implemented based on an ECS, and the NFV ECS in the first service VPC is implemented based on an FPGA, but it is not limited to this. The client ECS is an example of client instance taking an ECS as an example. Similarly, the NFV ECS is an ECS carrying an NFV network element and is an example of an NFV instance taking ECS as an example.

In order to be compatible with an ENI and not change the processing logic of the first VS, the NFV-GW has a simulated ENI, namely a fake-ENI, and a fake-ENI is deployed in each client VPC, and the fake-ENI points to the NFV-GW. The NFV-GW can have different fake-ENIs, and different fake-ENIs correspond to an NFV ECS in different service VPCs, which is configured to implement an ECMP.

The client ECS sends a data packet to access the NFV ECS, as shown in FIG. 4. A packet format of the data packet includes: a payload (payload) part, a TCP/UDP header, IP header information (IP hdr) and Ethernet header information (Eth hdr), and the data packet reaches the first VS.

The first VS performs a tunnel encapsulation to obtain a first tunnel packet. As shown in FIG. 4, a packet format of the first tunnel packet includes: a payload (payload) part, a TCP/UDP header, IP header information (IP hdr), VXLAN tunnel information (the tunnel encapsulation takes VXLAN as an example, but is not limited to this), a MAC address corresponding to a fake-ENI and Ethernet header information (Eth hdr), and the first tunnel packet arrives the first VGW or the second VGW. The first VS is locally pre-configured with a MAC address corresponding to a fake-ENI, but a fake-ENI identification (ID) cannot be determined. A source address of the VXLAN tunnel information is an IP address of the first VS, a destination address is an IP address of the first or second VGW, and VNI information is tenant information to which the client ECS belongs.

The first or second VGW parses the data packet from the first tunnel packet and re-performs a tunnel encapsulation on the data packet to obtain a second tunnel packet. As shown in FIG. 4, a packet format of the second tunnel packet includes: a payload (payload) part, a TCP/UDP header, IP header information (IP hdr), a MAC address corresponding to a fake-ENI, VXLAN tunnel information (the tunnel encapsulation takes VXLAN as an example, but is not limited to this) and Ethernet header information (Eth hdr), and the second tunnel packet reaches the NFV-GW. A source address of the VXLAN tunnel information is an IP address of the first or second VGW, a destination address is an IP address of the NFV-GW, and VNI information is tenant information to which the client ECS belongs.

The NFV-GW is configured with a MAC-fake-ENI conversion table, in which a fake-ENI ID corresponding to a MAC address is recorded. In FIG. 4, for example, it illustrates that a fake-ENI ID corresponding to the MAC address 0: 0: 0: 0: 1 is 1, and a fake-ENI ID corresponding to the MAC address 0: 0: 0: 2 is 2. The NFV-GW is also configured with a fake-ENI ECMP table, in which NFV ECSs corresponding to different fake-ENI IDs are recorded. In FIG. 4, for example, it illustrates that the ECMP table records that a fake-ENI ID 1 corresponds to ECS IP1 and a fake-ENI ID 2 corresponds to FPGA IP2. The ECS IP1 represents the NFV ECS implemented based on an ECS in the second service VPC, and the FPGA IP2 represents the NFV ECS implemented based on a FPGA in the first service VPC.

In addition, the NFV-GW is also configured with a fake-ENI forwarding table, in which export encapsulation information corresponding to different fake-ENI IDs is recorded. In FIG. 4, the forwarding table records that a fake-ENI ID 1 corresponds to that the first VGW performs a tunnel encapsulation by adopting VXLAN, and a fake-ENI ID 2 corresponds to that the first VGW performs a tunnel encapsulation by adopting VXLAN. The forwarding table shown in FIG. 4 indicates a tunnel protocol adopted by an outer tunnel encapsulation; and a tunnel protocol adopted by an inner tunnel encapsulation is not shown in the table, which can be recorded in other ways or a default protocol can be adopted. In the embodiment of the present application, a GENEVE protocol is taken as an example for an inner tunnel encapsulation.

In addition, the NFV-GW is also configured with a fake-ENI IP address mapping table, in which the IP address information of the NFV ECS and the second VS corresponding to different fake-ENI IDs are recorded. In FIG. 4, for example, it illustrates that the mapping table records that a fake-ENI ID 1 corresponds to an IP address 1.1.1.1 of the second VS in the second service VPC, and an IP address 2.1.1.1 of the NFV ECS (i.e., the ECS IP1); fake-ENI 2 corresponds to an IP address 1.2.2.2 of the second VS in the first service VPC, and an IP address 2.2.2.2 of the NFV ECS (i.e., the FPGA IP2).

It is stated here that the above four information tables can be implemented as one information table or two or three information tables, and the mean able to record the above corresponding relationship or mapping relationship is also acceptable, in addition to the information table, which is not limited here.

Based on the above corresponding relationship or mapping relationship, the NFV-GW can look up the MAC-fake-ENI conversion table according to an MAC address corresponding to a fake-ENI which is contained in the second tunnel packet, so as to obtain a fake-ENI ID corresponding to the MAC address, so as to implement an ECMP; then, according to the determined fake-ENI ID, look up the fake-ENI ECMP table, the fake-ENI forwarding table and the fake-ENI IP address mapping table to determine a corresponding tunnel encapsulation information, the IP address corresponding to the NFV ECS and the IP address corresponding to the second VS, and complete the inner and outer two-layer tunnel encapsulations according to the information, thus obtain a third tunnel packet. As shown in FIG. 4, a packet format obtained by an inner tunnel encapsulation includes: a payload (payload) part, a TCP/UDP header, IP header information (IP hdr), GENEVE tunnel information (inner tunnel information) and Ethernet header information (Eth hdr). A packet format of the third tunnel packet obtained by further outer tunnel encapsulation includes: a payload (payload) part, a TCP/UDP header, IP header information (IP hdr), GENEVE tunnel information (inner tunnel information), VXLAN tunnel information (outer tunnel information) and Ethernet header information (Eth hdr), and the third tunnel packet reaches the second VS. A source address of the VXLAN tunnel information is an IP address of the NFV-GW, a destination address is an IP address information corresponding to the second VS in the fake-ENI IP address mapping table, and VNI information is an VNI corresponding to the NFV-GW. Accordingly, a source address of the GENEVE tunnel information is an IP address of the NFV-GW, a destination address is an IP address corresponding to the NFV ECS in the fake-ENI IP address mapping table, and VNI information is tenant information to which the client ECS belongs.

After removing the outer tunnel information, the second VS sends the packet to the corresponding NFV ECS, which can determine the tenant information of the client ECS that initiated the access request according to the GENEVE tunnel information, and process the packet according to an NFV service provided by the NFV ECS.

In the embodiment, an NFV-GW is added to cooperate with the VGW, so that the tenant's stream is first guided to the NFV-GW without affecting the tenant's end, and a layer of tunnel encapsulation is added, and information such as identifying the tenant is encapsulated in the tunnel, so that a single user and a single stream are presented to the VS of the NFV ECS, which well solves the problem that an NFV ECS is constrained by the network IO capability of the VS, thereby increasing the number of tenants that can access the NFV ECS and beneficial for implementing the NFV ECS of a larger scale.

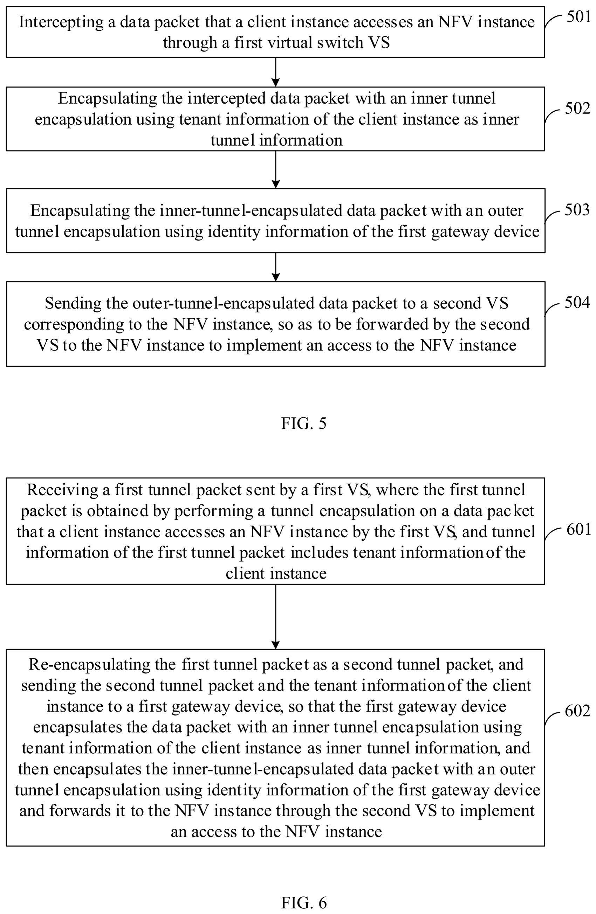

FIG. 5 is a flowchart of an NFV access method provided by an embodiment of the present application. The method is applied to a first gateway device, and as shown in FIG. 5, the method includes:
501. intercepting a data packet that a client instance accesses an NFV instance through a first virtual switch VS;
502. encapsulating the intercepted data packet with an inner tunnel encapsulation using tenant information of the client instance as inner tunnel information;
503. further encapsulating the inner-tunnel-encapsulated data packet with an outer tunnel encapsulation using identity information of the first gateway device;
504. sending the outer-tunnel-encapsulated data packet to a second VS corresponding to the NFV instance, so as to be forwarded by the second VS to the NFV instance to implement an access to the NFV instance.

In an alternative embodiment, the intercepting a data packet that a client instance accesses an NFV instance through a first virtual switch VS includes: receiving a first tunnel packet sent by the first VS, where the first tunnel packet is obtained by performing a tunnel encapsulation on the data packet by the first VS, and tunnel information of the first tunnel packet includes tenant information of the client instance.

In an alternative embodiment, the intercepting a data packet that a client instance accesses an NFV instance through a first virtual switch VS includes: receiving a second tunnel packet and tenant information of the client instance which are sent by a second gateway device, where the second tunnel packet is obtained by performing a tunnel encapsulation on a first tunnel packet by the second gateway device, and the first tunnel packet is obtained by performing a tunnel encapsulation on the data packet by the first VS, and tunnel information of the first tunnel packet includes tenant information of the client instance.

In an alternative embodiment, the encapsulating the intercepted data packet with an inner tunnel encapsulation using tenant information of the client instance as inner tunnel information includes: taking address information of the first gateway device and address information of the NFV instance as a source address and a destination address of the inner tunnel information, respectively; taking the tenant information of the client instance as virtual network identification VNI information of the inner tunnel information; and performing the inner tunnel encapsulation on the data packet.

In an alternative embodiment, the encapsulating the inner-tunnel-encapsulated data packet with an outer tunnel encapsulation using identity information of the first gateway device includes: taking address information of the first gateway device and address information of the second VS as a source address and a destination address of outer tunnel information; taking identification information of the first gateway device as VNI information of the outer tunnel information; and encapsulating the inner-tunnel-encapsulated data packet with an outer tunnel encapsulation.

In an alternative embodiment, the inner tunnel encapsulation or the outer tunnel encapsulation adopts GENEVE, or VXLAN, or SRv6, and the technologies adopted by the inner tunnel encapsulation and the outer tunnel encapsulation are the same or different.

In an alternative embodiment, the tenant information of the client instance is an ID of the client VPC or an ID of the tenant, and identification information of the first gateway device is simulated ENI information of the first gateway device, that is, a fake-ENI ID, or a VNI corresponding to the first gateway device.

In an alternative embodiment, the method further includes acquiring a MAC address corresponding to a fake-ENI of the first gateway device from the first tunnel packet or the second tunnel packet, determining a fake-ENI ID corresponding to the MAC address in the first tunnel packet or the second tunnel packet according to a conversion table of MAC address and fake-ENI ID, and determining a corresponding tunnel encapsulation information and an IP address of a corresponding NFV ECS and IP address of a corresponding second VS according to the determined fake-ENI ID, performing an inner tunnel encapsulation and an outer tunnel encapsulation on the data packet in turn according to the corresponding tunnel encapsulation information, the IP address of the corresponding NFV ECS and the IP address of the corresponding second VS. The performing an inner tunnel encapsulation on the data packet mainly refers to taking an IP address of the first gateway device as a source address in inner tunnel information, taking the IP address of the corresponding NFV ECS as a destination address of the inner tunnel information, and taking tenant information of the client instance as VNI information in the inner tunnel information and performing an inner tunnel encapsulation on the data packet. The encapsulating the inner-tunnel-encapsulated data packet with an outer tunnel encapsulation mainly refers to taking an IP address of the first gateway device as a source address in outer tunnel information, taking the IP address of the corresponding second VS as a destination address of the outer tunnel information, and taking VNI of the first gateway device as VNI information in the outer tunnel information and encapsulating the inner-tunnel-encapsulated data packet with an outer tunnel encapsulation .

FIG. 6 is a flowchart of another NFV access method provided by an embodiment of the present application. The method is applied to a second gateway device, and as shown in FIG. 6, the method includes:
601. receiving a first tunnel packet sent by a first VS, where the first tunnel packet is obtained by performing a tunnel encapsulation on a data packet that a client instance accesses an NFV instance by the first VS, and tunnel information of the first tunnel packet includes tenant information of the client instance;
602. re-encapsulating the first tunnel packet as a second tunnel packet, and sending the second tunnel packet and the tenant information of the client instance to a first gateway device, so that the first gateway device encapsulates the data packet with an inner tunnel encapsulation using the tenant information of the client instance as inner tunnel information, and then encapsulates the inner-tunnel-encapsulated data packet with an outer tunnel encapsulation using identity information of the first gateway device and forwards it to the NFV instance through the second VS to implement an access to the NFV instance.

For the detailed implementation and technical effects of each step in the above-mentioned method embodiments, please refer to the description of the above-mentioned embodiments, and will not repeat them here.

It should be noted that in some processes described in the above embodiments and the accompanying drawings, a plurality of operations are shown in a concrete order, but it should be clearly understood that these operations may be executed out of the order in which they are shown here or executed in parallel. The serial numbers of the operations, such as 501 and 502, are only used to distinguish different operations, and the serial numbers themselves do not represent any execution order. In addition, these processes may include more or fewer operations, and these operations may be performed sequentially or in parallel. It should be noted that the descriptions of "first" and "second" herein are used to distinguish different messages, devices, modules, etc., and do not represent the sequence, nor do they limit that "first" and "second" are different types.

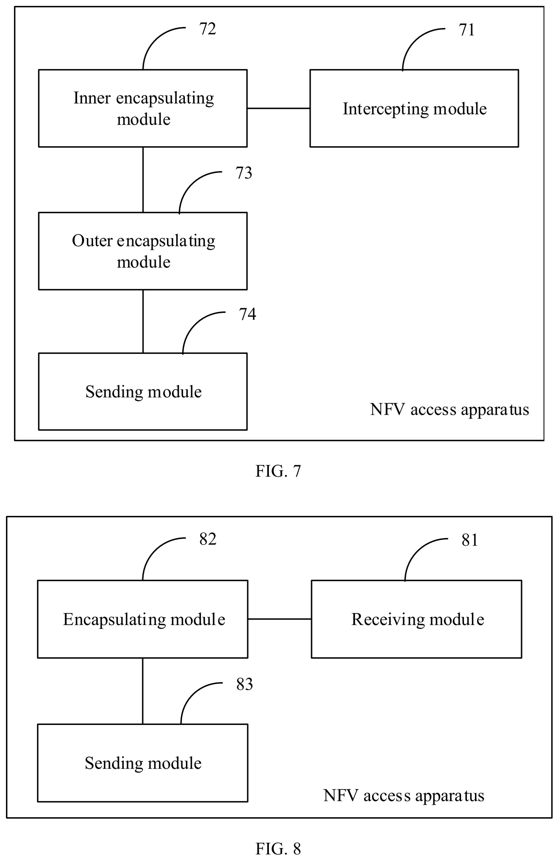

FIG. 7 is a schematic structural diagram of an NFV access apparatus provided by an embodiment of the present application. As shown in FIG. 7, the apparatus includes an intercepting module 71, an inner encapsulating module 72, an outer encapsulating module 73 and a sending module 74.

The intercepting module 71 is configured to intercept a data packet of a client instance accessing a NFV instance through a first virtual switch VS. The inner encapsulating module 72 is configured to encapsulate the data packet with an inner tunnel encapsulation using tenant information of the client instance as inner tunnel information. The outer encapsulating module 73 is configured to encapsulate the inner-tunnel-encapsulated data packet with an outer tunnel encapsulation using identity information of the first gateway device. The sending module 74 is configured to send the outer-tunnel-encapsulated data packet to a second VS corresponding to the NFV instance, so as to be forwarded by the second VS to the NFV instance to implement an access to the NFV instance.

In an alternative embodiment, the intercepting module 71 is specifically configured to receive a first tunnel packet sent by the first VS, where the first tunnel packet is obtained by performing a tunnel encapsulation on the data packet by the first VS, and tunnel information of the first tunnel packet includes tenant information of the client instance.

In an alternative embodiment, the intercepting module 71 is specifically configured to receive a second tunnel packet and tenant information of the client instance which are sent by a second gateway device, where the second tunnel packet is obtained by performing a tunnel encapsulation on a first tunnel packet by the second gateway device, and the first tunnel packet is obtained by performing a tunnel encapsulation on the data packet by the first VS, and tunnel information of the first tunnel packet includes tenant information of the client instance.

In an alternative embodiment, the inner encapsulating module 72 is specifically configured to take address information of the first gateway device and address information of the NFV instance as a source address and a destination address of the inner tunnel information, respectively, and take the tenant information of the client instance as virtual network identification VNI information of the inner tunnel information, and perform an inner tunnel encapsulation on the data packet.

In an alternative embodiment, the outer encapsulating module 73 is specifically configured to take address information of the first gateway device and address information of the second VS as a source address and a destination address of outer tunnel information, take identification information of the first gateway device as VNI information of the outer tunnel information, and encapsulate the inner-tunnel-encapsulated data packet with an outer tunnel encapsulation.

In an alternative embodiment, the inner tunnel encapsulation or the outer tunnel encapsulation adopts GENEVE, or VXLAN, or SRv6, and the technologies adopted by the inner tunnel encapsulation and the outer tunnel encapsulation are the same or different.

In an alternative embodiment, the tenant information of the client instance is an ID of the client VPC or an ID of the tenant, and the identification information of the first gateway device is simulated ENI information of the first gateway device or an VNI corresponding to the first gateway device.

FIG. 8 is a schematic structural diagram of another NFV access apparatus provided by an embodiment of the present application. As shown in FIG. 8, the apparatus includes a receiving module 81, an encapsulating module 82 and a sending module 83.

The receiving module 81 is configured to receive a first tunnel packet sent by a first virtual switch VS, where the first tunnel packet is obtained by performing a tunnel encapsulation on a data packet that a client instance accesses an NFV instance by the first VS, and tunnel information of the first tunnel packet includes tenant information of the client instance. The encapsulating module 82 is configured to re-encapsulate the first tunnel packet as a second tunnel packet. The sending module 83 is configured to send the second tunnel packet and the tenant information of the client instance to a first gateway device, so that the first gateway device encapsulates the data packet with an inner tunnel encapsulation using the tenant information of the client instance as inner tunnel information, and then encapsulates the inner-tunnel-encapsulated data packet with an outer tunnel encapsulation using identity information of the first gateway device and forwards it to the NFV instance through the second VS, so as to implement an access to the NFV instance.

For the detailed implementation and technical effects of each module in the above-mentioned apparatus embodiments, please refer to the description of the above-mentioned embodiments, which will not be repeat here.

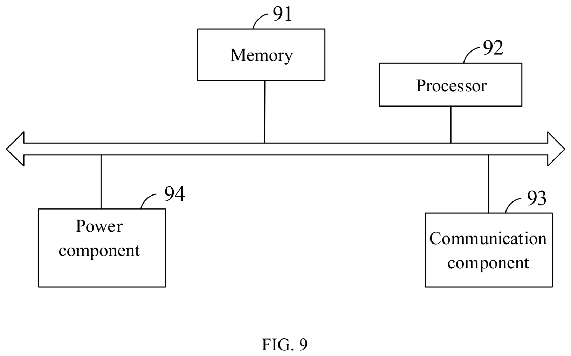

FIG. 9 is a schematic structural diagram of a gateway device provided by an embodiment of the present application. The gateway device can be implemented as a first gateway device, and as shown in FIG. 9, the gateway device includes a memory 91 and a processor 92.

The memory 91 is configured to store a computer program and can be configured to store various other data to support operations on the gateway device. Examples of these data include an instruction, a message, a picture, a video, etc. for any application or method operating on the gateway device.

The processor 92, coupled with the memory 91, is configured to execute the computer program in the memory 91, so as to intercept a data packet that a client instance accesses an NFV instance through a first virtual switch VS; encapsulate the intercepted data packet with an inner tunnel encapsulation using tenant information of the client instance as inner tunnel information; encapsulate the inner-tunnel-encapsulated data packet with an outer tunnel encapsulation using identity information of the first gateway device; send the outer-tunnel-encapsulated data packet to a second VS corresponding to the NFV instance, so as to be forwarded by the second VS to the NFV instance to implement an access to the NFV instance.

In an alternative embodiment, in the case that the processor 92 intercepts a data packet that a client instance accesses an NFV instance through a first virtual switch VS, the processor is specifically configured to receive a first tunnel packet sent by the first VS, and the first tunnel packet is obtained by performing a tunnel encapsulation on the data packet by the first VS, and tunnel information of the first tunnel packet includes tenant information of the client instance.

In an alternative embodiment, in the case that the processor 92 intercepts a data packet that a client instance accesses an NFV instance through a first virtual switch VS, the processor is specifically configured to receive a second tunnel packet and tenant information of the client instance which are sent by a second gateway device, where the second tunnel packet is obtained by performing a tunnel encapsulation on a first tunnel packet by the second gateway device, and the first tunnel packet is obtained by performing a tunnel encapsulation on the data packet by the first VS, and tunnel information of the first tunnel packet includes tenant information of the client instance.

In an alternative embodiment, in the case that the processor 92 encapsulates the data packet with an inner tunnel encapsulation using tenant information of the client instance as inner tunnel information, the processor 92 is specifically configured to take address information of the first gateway device and address information of the NFV instance as a source address and a destination address of the inner tunnel information, respectively, and take the tenant information of the client instance as virtual network identification VNI information of the inner tunnel information, and perform an inner tunnel encapsulation on the data packet.

In an alternative embodiment, in the case that the processor 92 encapsulates the inner-tunnel-encapsulated data packet with an outer tunnel encapsulation using identity information of the first gateway device, the processor is specifically configured to take address information of the first gateway device and address information of the second VS as a source address and a destination address of outer tunnel information, take identification information of the first gateway device as VNI information of the outer tunnel information, and encapsulate the inner-tunnel-encapsulated data packet with an outer tunnel encapsulation.

In an alternative embodiment, the inner tunnel encapsulation or the outer tunnel encapsulation adopts GENEVE, or VXLAN, or SRv6, and the technologies adopted by the inner tunnel encapsulation and the outer tunnel encapsulation are the same or different.

In an alternative embodiment, the tenant information of the client instance is an ID of the client VPC or an ID of the tenant, and the identification information of the first gateway device is simulated ENI information of the first gateway device or an VNI corresponding to the first gateway device.

In an alternative embodiment, in the case that the first tunnel packet or the second tunnel packet further includes a MAC address corresponding to a fake-ENI of the first gateway device, the processor 92 is further configured to obtain the MAC address corresponding to the fake-ENI of the first gateway device from the first tunnel packet or the second tunnel packet; determine a fake-ENI ID corresponding to the MAC address in the first tunnel packet or the second tunnel packet according to a conversion table of MAC address and fake-ENI ID; determine a corresponding tunnel encapsulation information, an IP address of a corresponding NFV ECS and an IP address of a corresponding second VS according to the determined fake-ENI ID; perform an inner tunnel encapsulation and an outer tunnel encapsulation on the data packet in turn according to the corresponding tunnel encapsulation information, the IP address of the corresponding NFV ECS and the IP address of the corresponding second VS. The perform an inner tunnel encapsulation on the data packet mainly refers to take an IP address of the first gateway device as a source address in inner tunnel information, take the IP address of the corresponding NFV ECS as a destination address of the inner tunnel information, and take tenant information of the client instance as VNI information in the inner tunnel information and perform an inner tunnel encapsulation on the data packet. The encapsulating the inner-tunnel-encapsulated data packet with an outer tunnel encapsulation mainly refers to take an IP address of the first gateway device as a source address in outer tunnel information, take the IP address of the corresponding second VS as a destination address of the outer tunnel information, and take VNI of the first gateway device as VNI information in the outer tunnel information and encapsulate the inner-tunnel-encapsulated data packet with an outer tunnel encapsulation.

As shown in FIG. 9, the gateway device also includes a communication component 93, a power component 94 and other components. Only some components are shown schematically in FIG. 9, which does not mean that the gateway device only includes the components shown in FIG. 9.

An embodiment of the present application also provides a gateway device, and the structure of the gateway device is the same as or similar to that of the gateway device shown in FIG. 9, so the details are not repeated. The gateway device of the embodiment is different from the gateway device shown in FIG. 9 in that functions implemented by the processor executing the computer program stored in the memory are different. In the gateway device of the embodiment, when the processor executes the computer program stored in the memory, the following actions can be implemented: receiving a first tunnel packet sent by a first VS, where the first tunnel packet is obtained by performing a tunnel encapsulation on a data packet that a client instance accesses an NFV instance by the first VS, and tunnel information of the first tunnel packet includes tenant information of the client instance; re-encapsulating the first tunnel packet as a second tunnel packet, and sending the second tunnel packet and the tenant information of the client instance to a first gateway device, so that the first gateway device encapsulates the data packet with an inner tunnel encapsulation using the tenant information of the client instance as inner tunnel information, and then encapsulates the inner-tunnel-encapsulated data packet with an outer tunnel encapsulation using identity information of the first gateway device and forwards it to the NFV instance through the second VS to implement an access to the NFV instance.

Correspondingly, an embodiment of the present application also provides a computer-readable storage medium storing a computer program, which, when executed by a processor, enables the processor to implement a step in the method shown in FIG. 5 or FIG. 6.

Correspondingly, an embodiment of the present application also provides a computer program product, including a computer program/instruction, which, when executed by a processor, cause the processor to implement a step in the method shown in FIG. 5 or FIG. 6.

The above memory can be implemented by any type of volatile or nonvolatile storage device or their combination, such as a static random-access memory (Static Random-Access Memory, SRAM), an electrically erasable programmable read only memory (Electrically Erasable Programmable Read Only Memory, EEPROM), EEPROM), an erasable programmable read only memory (Erasable Programmable Read Only Memory, EPROM), a programmable read-only memory (Programmable Read-Only Memory, PROM), a read-only memory (Read-Only Memory, ROM), a magnetic memory, a flash memory, a magnetic disk or an optical disk.

The communication component is configured to facilitate wired or wireless communication between the device where the communication component is located and other devices. The device where the communication component is located can access a wireless network based on a communication standard, such as WiFi, a mobile communication network such as 2G, 3G, 4G/LTE, 5G, or their combination. In an exemplary embodiment, the communication component receives a broadcast signal or broadcast related information from an external broadcast management system via a broadcast channel. In an exemplary embodiment, the communication component further includes a near field communication (NFC) module to facilitate short-range communication. For example, the NFC module can be implemented based on radio frequency identification (Radio Frequency Identification, RFID) technology, infrared data association (Infrared Data Association, IrDA) technology, ultra-wide band (ultra-wide band, UWB) technology, BlueTooth (BlueTooth, BT) technology and other technologies.

The power component provides power for various components of the device where the power component is located. The power component can include a power management system, one or more power supplies, and other components associated with generating, managing and distributing power for the device where the power component is located.

It should be understood by those skilled in the art that embodiments of the present application can be implemented as a method, a system, or a computer program product. Therefore, the present application can take the form of an entirely hardware embodiment, an entirely software embodiment, or an embodiment combining software and hardware aspects. Furthermore, the present application can take the form of a computer program product implemented on one or more computer-readable storage media (including but not limited to a disk storage, a compact disc read-only memory (Compact Disc Read-Only Memory, CD-ROM), optical storage, etc.) containing a computer usable program code.

The present application is described with reference to a flowchart and/or block diagram of a method, a device (system), and a computer program product according to embodiments of the present application. It should be understood that each flow and/or block in the flowchart and/or block diagram, and a combination of the flow and/or block in the flowchart and/or block diagram can be implemented by a computer program instruction. These computer program instructions may be provided to a processor of a general-purpose computer, special-purpose computer, embedded processor or other programmable data processing device to produce a machine, such that the instructions which are executed by the processor of the computer or other programmable data processing device produces an apparatus for implementing the function specified in the flow or flows in the flowchart and/or block or blocks in the block diagram.

These computer program instructions may also be stored in a computer-readable memory that can direct a computer or other programmable data processing device to function in a particular manner, such that the instruction stored in the computer-readable memory produces an article of manufacture including an instruction apparatus that implements the function specified in the flow or flows in the flowchart and/or block or blocks in the block diagram.

These computer program instructions may also be loaded onto a computer or other programmable data processing device, such that a series of operational steps are performed on the computer or other programmable apparatus to produce a computer-implemented process, such that the instruction executed on the computer or other programmable apparatus provides a step for implementing the function specified in the flow or flows in the flowchart and/or block or blocks in the block diagram.

In a typical configuration, a computing device includes one or more processors (Central Processing Unit, CPU), an input/output interface, a network interface and a memory. The memory may include non-permanent memory in a computer-readable medium, a random access memory (Random Access Memory, RAM) and/or nonvolatile memory, such as a read-only memory (ROM) or a flash RAM. The memory is an example of a computer-readable medium.

A computer-readable medium, including a permanent media and a non-permanent media, a removable media and a non-removable media, can store information by any method or technology. The information can be a computer-readable instruction, a data structure, a module of a program or other data. Examples of a computer storage medium include, but are not limited to, a phase-change random access memory (Phase-change Random Access Memory, PRAM), a static random access memory (SRAM), a dynamic random access memory (Dynamic Random Access Memory, DRAM), DRAM), other types of random access memory (RAM), a read-only memory (ROM), an electrically erasable programmable read-only memory (EEPROM), a flash memory or other memory technology, a compact disc read-only memory (CD-ROM), a digital video disc (Digital Video Disc, DVD) or other optical storage, a magnetic cassette, a magnetic tape disk storage or other magnetic storage devices or any other non-transmission medium, which can be configured for store information that can be accessed by a computing device. According to the definition herein, a computer-readable medium does not include a temporary computer-readable medium (transitory media), such as a modulated data signal and a carrier wave.

It should also be noted that the terms "including", "include" or any other variation thereof are intended to cover non-exclusive inclusion, so that a process, method, commodity or device including a series of elements includes not only those elements, but also other elements not explicitly listed, or elements inherent to such process, method, commodity or device. Without more restrictions, the element defined by the sentence "including a..." does not exclude that there are other identical elements in the process, method, commodity or device including the element.

The above are only examples of the present application, and are not used to limit the present application. Various modifications and variations will occur to those skilled in the art. Any modification, equivalent substitution, improvement, etc. made within the spirit and principle of the present application should fall into the scope of the claims of the present application.

## Claims

1. A network function virtualization NFV access system, comprising: a first gateway device interconnected between a client virtual private cloud VPC and a service VPC; wherein the client VPC comprises a client instance and a first virtual switch VS providing a data forwarding service for the client instance, and the service VPC comprises an NFV instance carrying an NFV network element and a second VS providing a data forwarding service for the NFV instance;
wherein the first gateway device is configured to:
intercept a data packet of the client instance accessing the NFV instance through the first VS;
encapsulate the intercepted data packet with an inner tunnel encapsulation using tenant information of the client instance as inner tunnel information;
further encapsulate the inner-tunnel-encapsulated data packet with an outer tunnel encapsulation using identity information of the first gateway device; and
send the outer-tunnel-encapsulated data packet to the second VS, so as to be forwarded by the second VS to the NFV instance to implement an access to the NFV instance.

2. The system according to claim 1, wherein in the case that the first gateway device intercepts a data packet of the client instance accessing the NFV instance through the first VS, the first gateway device is specifically configured to:
receive a first tunnel packet sent by the first VS, wherein the first tunnel packet is obtained by performing a tunnel encapsulation on the data packet by the first VS, and tunnel information of the first tunnel packet comprises tenant information of the client instance.

3. The system according to claim 1, further comprising: a second gateway device interconnected with the first VS and the first gateway device;
wherein the second gateway device is configured to receive a first tunnel packet sent by the first VS, and the first tunnel packet is obtained by performing a tunnel encapsulation on the data packet by the first VS, and tunnel information of the first tunnel packet comprises tenant information of the client instance, re-encapsulate the first tunnel packet as a second tunnel packet, and send the second tunnel packet and the tenant information of the client instance to the first gateway device;
in the case that the first gateway device intercepts a data packet of the client instance accessing the NFV instance through the first VS, the first gateway device is specifically configured to: receive the second tunnel packet and the tenant information of the client instance which are sent by the second gateway device.

4. The system according to any one of claims 1-3, wherein the first gateway device encapsulating the intercepted data packet with an inner tunnel encapsulation using tenant information of the client instance as inner tunnel information comprises:
taking address information of the first gateway device and address information of the NFV instance as a source address and a destination address of inner tunnel information, respectively; taking tenant information of the client instance as virtual network identification VNI information of the inner tunnel information; and performing an inner tunnel encapsulation on the data packet.

5. The system according to claim 4, wherein the first gateway device encapsulating the inner-tunnel-encapsulated data packet with an outer tunnel encapsulation using identity information of the first gateway device comprises:
taking address information of the first gateway device and address information of the second VS as a source address and a destination address of outer tunnel information; taking identification information of the first gateway device as VNI information of the outer tunnel information; and encapsulating the inner-tunnel-encapsulated data packet with an outer tunnel encapsulation.

6. A network function virtualization NFV access method, which is applied to a first gateway device and comprising:
intercepting a data packet of a client instance accessing an NFV instance through a first virtual switch VS;
encapsulating the intercepted data packet with an inner tunnel encapsulation using tenant information of the client instance as inner tunnel information;
further encapsulating the inner-tunnel-encapsulated data packet with an outer tunnel encapsulation using identity information of the first gateway device; and
sending the outer-tunnel-encapsulated data packet to a second VS corresponding to the NFV instance, so as to be forwarded by the second VS to the NFV instance to implement an access to the NFV instance.

7. The method according to claim 6, wherein the intercepting a data packet of a client instance accessing an NFV instance through a first virtual switch VS comprises:
receiving a first tunnel packet sent by the first VS, wherein the first tunnel packet is obtained by performing a tunnel encapsulation on the data packet by the first VS, and tunnel information of the first tunnel packet comprises tenant information of the client instance.

8. The method according to claim 6, wherein the intercepting a data packet of a client instance accessing an NFV instance through a first virtual switch VS comprises:
receiving a second tunnel packet and tenant information of the client instance which are sent by a second gateway device, wherein the second tunnel packet is obtained by performing a tunnel encapsulation on a first tunnel packet by the second gateway device, and the first tunnel packet is obtained by performing a tunnel encapsulation on the data packet by the first VS, and tunnel information of the first tunnel packet comprises tenant information of the client instance.

9. The method according to any one of claims 6-8, wherein the encapsulating the intercepted data packet with an inner tunnel encapsulation using tenant information of the client instance as inner tunnel information comprises:
taking address information of the first gateway device and address information of the NFV instance as a source address and a destination address of inner tunnel information, respectively; taking tenant information of the client instance as virtual network identification VNI information of the inner tunnel information; and performing an inner tunnel encapsulation on the data packet.

10. The method according to claim 9, wherein the encapsulating the inner-tunnel-encapsulated data packet with an outer tunnel encapsulation using identity information of the first gateway device comprises:
taking address information of the first gateway device and address information of the second VS as a source address and a destination address of outer tunnel information; taking identification information of the first gateway device as VNI information of the outer tunnel information; and encapsulating the inner-tunnel-encapsulated data packet with an outer tunnel encapsulation.

11. The method according to claim 10, wherein the inner tunnel encapsulation or the outer tunnel encapsulation adopts generic network virtualization encapsulation GENEVE, or virtual extended local area network VXLAN, or IPv6-based segment routing SRv6, and the technologies adopted by the inner tunnel encapsulation and the outer tunnel encapsulation are the same or different.

12. A network function virtualization NFV access method, applied to a second gateway device and comprising:
receiving a first tunnel packet sent by a first virtual switch VS, wherein the first tunnel packet is obtained by performing a tunnel encapsulation on a data packet of a client instance accessing an NFV instance by the first VS, and tunnel information of the first tunnel packet comprises tenant information of the client instance;
re-encapsulating the first tunnel packet as a second tunnel packet, and sending the second tunnel packet and the tenant information of the client instance to a first gateway device, so that the first gateway device encapsulates the data packet with an inner tunnel encapsulation using the tenant information of the client instance as inner tunnel information, and encapsulates the inner-tunnel-encapsulated data packet with an outer tunnel encapsulation using identity information of the first gateway device and forwards the outer-tunnel-encapsulated data packet to the NFV instance through a second VS, thus implementing an access to the NFV instance.

13. A gateway device, comprising: a memory and a processor, wherein the memory is configured to store a computer program; and the processor, coupled with the memory, is configured to execute the computer program, causing the processor to implement steps in the method according to any one of claims 6-11 or steps in the method according to claim 12.

14. A computer-readable storage medium storing a computer program which, when executed by a processor, causes the processor to implement steps in the method according to any one of claims 6-11 or steps in the method according to claim 12.
